# EUROPÄISCHE PATENTSCHRIFT

(11) **EP 0 497 942 B1**
(45) Veröffentlichungstag und Bekanntmachung des Hinweises auf die Patenterteilung: **10.05.1995**
(21) Anmeldenummer: 91914286.9
(22) Anmeldetag: 27.08.1991
(51) Int. Cl.: G01B 11/16, G01C 15/10

(54) **VORRICHTUNG ZUR BERÜHRUNGSLOSEN BESTIMMUNG DER POSITION VON LOTDRÄHTEN**
DEVICE FOR THE CONTACTLESS DETERMINATION OF THE POSITION OF PLUMB LINES
DISPOSITIF DE DETERMINATION SANS CONTACT DE LA POSITION DE FILS A PLOMB

(30) Priorität: 29.08.1990 CH 2804/90
(43) Veröffentlichungstag der Anmeldung: 12.08.1992
(73) Patentinhaber: CELIO ENGINEERING SA, CH-6775 Ambri (CH)
(72) Erfinder: CELIO, Tino, Dr., CH-6775 Ambri (CH); PETAR, Fausto, CH-6775 Ambri (CH)
(86) Internationale Anmeldenummer: CH9100183
(87) Internationale Veröffentlichungsnummer: WO9204595

(56) Entgegenhaltungen:
- EP-A- 0 094 522
- EP-A- 0 409 341
- WO-A-88/01366
- WO-A-90/10193
- DE-A- 1 952 573
- US-A- 3 501 642

## Beschreibung

Die Erfindung betrifft eine Vorrichtung zur berührungslosen Messung und Ueberwachung der Position von Lotdrähten in Staumauern.

Bekanntlich werden in Staumauern Verformungen resp. Verschiebungen mittels Messung der Positionsveränderung des Mauerwerkes gegenüber Lotachsen von Hängeresp. Schwimmloten überwacht.
Stichprobenartige Messungen werden mittels optischen Zielvorrichtungen durchgeführt. Ständige Lotüberwachung erfolgt bis heute meistens mittels mechanischer Feststellung der Drahtposition. Zu diesem Zwecke werden Gabeln verwendet, welche zwangsläufig auf die Berührung des Lotdrahtes angewiesen sind. Bereits kleinste Kräfte verursachen allerdings Bewegungen des Drahtes, welche gegenüber der betriebsmässig (infolge Wasserdruck, Temperatur) vorkommenden Verschiebungen des Mauerwerkes nicht vernachlässigbar sind.
Berührungslose Messunganordnungen mit induktiven Sensoren und mit Cameras wurden in den letzten Jahren vorgeschlagen. Sie konnten sich aber aus verschiedenen Gründen (Nichtlinearität, bewegte Teile, Preis) nicht durchsetzen.

Auch aktive Systeme (z.B. mit am Draht angehängten Lichtquellen oder Sendern) sind versucht worden.
Zusätzlich zu den erwähnten Nachteilen sind bei diesen Vorrichtungen die gewichtsmässige Symetrie sowie die Speisung der Aktivelemente problematisch.
Anordnungsmässig weisen ferner die meisten Vorrichtungen den Nachteil auf, dass sie das Messfeld räumlich umschlingen müssen um zweidimensionale Messung zu gewährleisten, siehe z.B. EP-A-0 409 341 (veröffentlicht am 23.01.91) oder EP-A-0 419 602 (veröffentlicht am 03.04.91).

Es ist Aufgabe der vorliegenden Erfindung eine Vorrichtung anzugeben, welche eine einfache, genaue und preiswerte Bestimmung der Lotdrahtposition ermöglicht.
Die Erfindung geht von üblicherweise in Staumauern vorhandenen Lotdrähten aus und zeigt, wie durch die Erstellung von Schattenprojektionen unter verschiedenen Winkeln, ihre zweidimensionale Position in berührungsloser Weise bestimmt werden kann.

In der Folge zeigen
- Abb. 1: die grundsätzliche Anordnung
- Abb. 2: die mathematischen Beziehungen

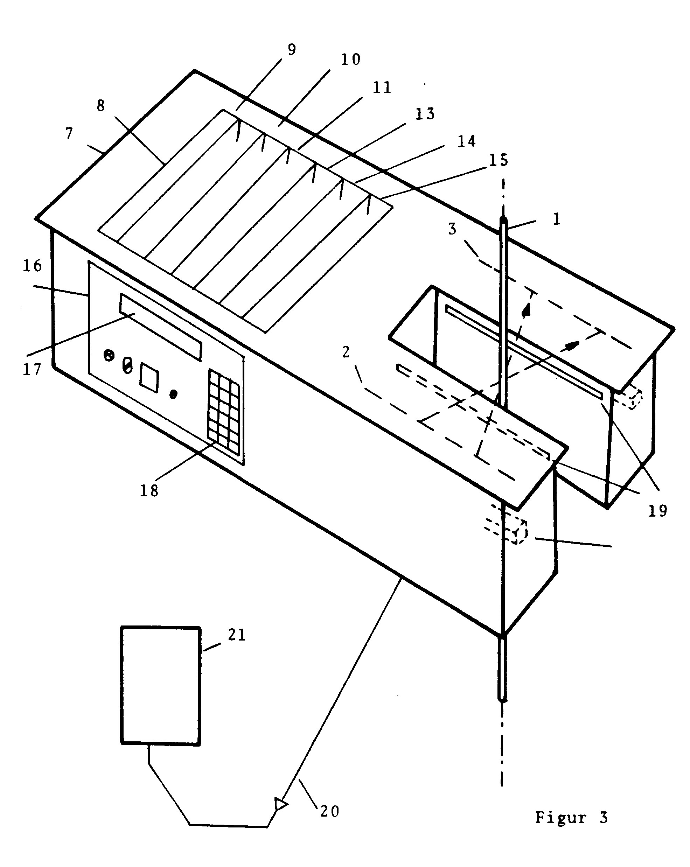

- Abb. 3: eine typische Ausführung

der erfindungsgemässen Vorrichtung.

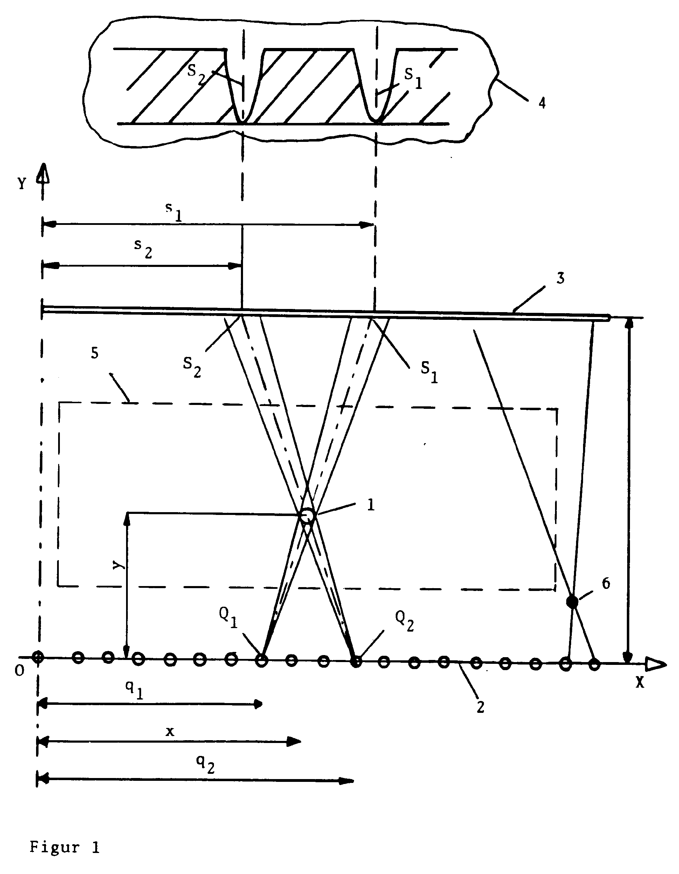

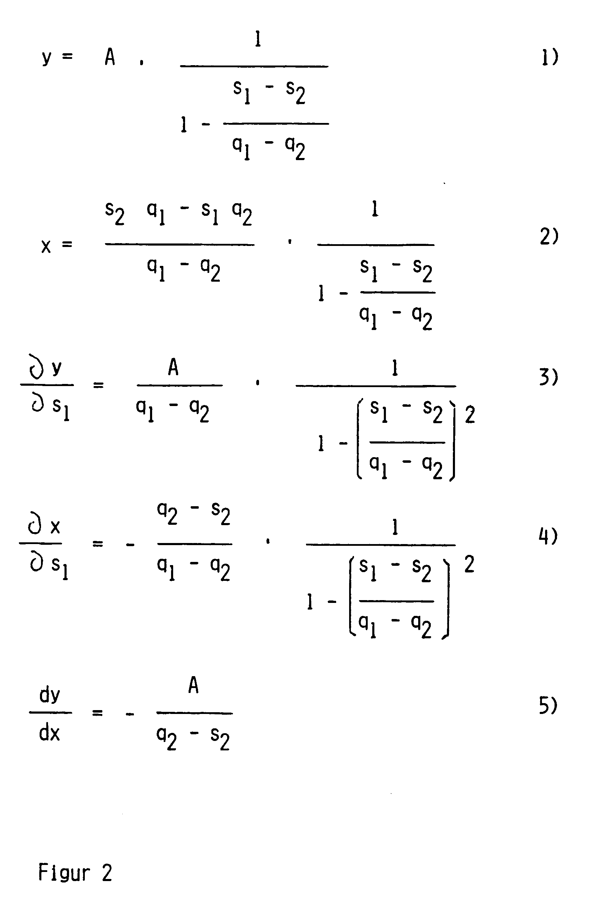

In Abb.1 ist Lotdraht 1 mit dem Bereich 5 seiner maximal möglichen Verschiebung angegeben. Erfindungsgemäss werden ausserhalb von Bereich 5 und vorzugsweise zueinander parallel, eine Reihe von Lichtquellen 2 und eine Reihe von Photodetektoren 3 angeordnet. Leuchtet eine Lichtquelle Q1 auf, dann entsteht auf Diodenreihe 2 einen Schatten S1 des Drahtes. Seine Lage s₁, bezogen auf einem (x,y) Achsensystem wird mittels elektrooptischer Lesung bestimmt. Lotdraht 1 befindet sich dann auf Gerade Q1-S1, welche durch Abstand A und Schnittweiten q₁, s₁ eindeutig definiert ist. Die Wiederholung dieses Vorgehens für jede Lichtgerade gestattet also die Bestimmung einer Schaar von Schattengeraden, welche sich wiederholt am Lotdraht kreuzen und deshalb seine Lage zweidimensional und mit grosser Genauigkeit zu ermitteln gestattet. Die diesbezüglichen Bestimmungsgleichungen 1), 2) sind in Abb.2 angegeben.

Die Vorteile des beschriebenen Verfahrens liegen in der Berührungslosigkeit, in der hohen Redundanz (Ueberbestimmung der Drahtlage), welche sich in hoher Genauigkeit niederschlägt, in der nur einseitigen Umschlingung des Messfeldes und in der bestechenden Einfachheit.

Eine spezielle Version der erfindungsgemässen Vorrichtung sieht die Bestimmung der Schnittweiten s auf der Diodenreihe anhand Schwerpunktrechnung der der einzelnen Schattenprojektionen S entsprechenden Videosignalen 4. Diesbezügliche Algorithmen sind längst bekannt.
Dieses Vorgehen kommt vorteilhafterweise zur Anwendung wenn die Dimensionen von Draht 1 und/oder Lichtquellen 2 gegenüber Abstand A nicht mehr vernachlässigbar sind und infolge Halbschatteneffekte die genaue Unterscheidung zwischen beleuchteten und nicht beleuchteten Detektoren fraglich wird.

Eine spezielle Ausführung der erfindungsgemässen Vorrichtung betrifft die Berechnung der Lotdrahtposition aus der Schar von Schattengeraden.
Wie Differentialformeln 3) und 4) zeigen ist zur Erreichung von hohen Genauigkeiten die Verwendung von flachen Schattengeraden (q₁-q₂ möglichst gross/ Formel 3) bei der y-Koordinate und von steilen Schattengeraden (q₂-s₂ möglichst klein/Formel 4) bei der x-Koordinate vorteilhaft.

Eine bevorzugte Ausführung der erfindungsgemässen Vorrichtung sieht die Verwendung von LED (Light Emitting Diodes) und von CCD (Charge Coupled Devices) als Lichtquelle resp. Photodetektoren vor.
Die Verwendung dieser Elemente ist besonders hinsichtlich räumlicher Auflösung (kleinste Dimensionen) und Lebensdauer vorteilhaft.

Eine spezielle Ausführung der erfindungsgemässen Vorrichtung sieht die Aufstellung, in bekannter Lage aber ausserhalb von Messbereich 5, von einem oder mehreren Eichstiften 6 vor.
Ihre Nachmessung mit anschliessendem Vergleich zwischen Ist- und Sollposition gestattet die laufende Kontrolle des Eichzustandes der Vorrichtung.

Eine spezielle Version der erfindungsgemässen Vorrichtung betrifft die Verwendung von nur zwei Lichtquellen 2.

Bei einer solchen Anordnung werden kleiner Aufwand und kurze Messdauer erreicht. Sie kommt vorteilhafterweise zur Anwendung dort wo auch schnelle Bewegungen des Lotdrahtes (z.B. infolge Erdbeben) erfasst werden sollen. Freilich wird dann dabei die Messgenauigkeit reduziert.

Eine spezielle Version der erfindungsgemässen Vorrichtung sieht die Abgabe von Warn- und Alarmsignalen bei Ueberschreitung von festgelegten Toleranzen vor. Diese Version ist speziell bei unbemanntem Betrieb vorteilhaft und gestattet ,falls erwünscht eine hierarchische Behandlung der Notzustände.

Fig.9 zeigt ein Ausführungsbeispiel der erfindungsgemässen Vorrichtung.
Lichtquellenreihe 2 und Detektorreihe 3 sind in einem tropfwassersicheren Gehäuse 7 unterbracht. Das Signallicht tritt durch Spalte 19 hindurch. Die Signalauswertung erfolgt im Elektronikteil 8, welcher Speisung 9, Prozessor 10, Video-Steuerung 11, AD-Wandler 13, Fernübertragung 14 und Alarmabgabe 15 umfasst.
Auf Bedienungsplatte 16 sind Anzeige 17, Tastatur 18 und Hilfsbetriebselemente angeordnet.
Bidirektionaler Fernbetrieb mit einer Zentrale 21 erfolgt über Kabelverbindung 20.

### Typische Ausführungsangaben:

- Lichtquellen :: Stanley E 130 Abstand 15mm/Grösse 0,3mm
- Photodetektoren :: Toshiba TCD128C 1728 Elemente/Grösse 0,1mm
- Lotdrahtdurchmesser:: 1,5 mm
- Messbereich :: (150x60)mm

## Patentansprüche

1. Vorrichtung zur berührungslosen, passiven Bestimmung der Lotdrahtposition in Staumauern, wobei die Bestimmung der Position zweidimensional in einer zum Lotdraht senkrecht liegenden Ebene erfolgt
dadurch gekennzeichnet
dass eine Reihe von Lichtquellen (2) und eine Reihe von Photodetektoren (3) auf gegenüberliegenden Seiten des Lotdrahtes (1) angeordnet sind,
dass durch sequentielles Aufleuchten der Lichtquellen sequentiell auf die Photodetektoren Schattenprojektionen des Lotdrahtes erzeugt werden,
dass aus der geometrischen Lage der Lichtquellen und ihrer Schattenprojektionen Schattengeraden bestimmt werden und,
dass aus der Schaar der Schattengeraden die Position des Lotdrahtes zweidimensional errechnet wird.

2. Vorrichtung nach Anspruch 1 dadurch gekennzeichnet, dass die Bestimmung der Lage der Schattenprojektion durch Schwerpunktrechnung des aus der Photodetektorreihe herrührenden Videosignales erfolgt.

3. Vorrichtung nach Anspruch 1 dadurch gekennzeichnet, dass aus der Schaar der Schattengeraden die steileren Geraden mehrheitlich zur Bestimmung der x-Koordinate und die flacheren Geraden mehrheitlich zur Bestimmung der y-Koordinaten herangezogen werden.

4. Vorrichtung gemäss Anspruch 1 dadurch gekennzeichnet, dass die Lichtquellen 1 als LED und die Photodetektoren als CCD ausgebildet sind.

5. Vorrichtung gemäss Anspruch 1 dadurch gekennzeichnet, dass ausserhalb des Messfeldes Stifte 6 zur Eichung der Messeinrichtung angeordnet sind.

6. Vorrichtung nach Anspruch 1 dadurch gekennzeichnet, dass die Reihe von Lichtquellen nur 2 Lichtquellen umfasst.

7. Vorrichtung gemäss Anspruch 1 dadurch gekennzeichnet, dass, wenn die Istlage von Lotdraht 1 ausserhalb vor gegebener beliebig einstellbarer Sollbereiche 5 liegt, Warn- und/oder Alarmsignale abgegeben werden.

## Claims

1. Device for the contactless passive determination of the position of plumb wires in dams, whereby this determination is performed twodimensionally in a plane perpendicular to the plumb wire
caracterized by the facts
that a row of light sources (2) and a row of photodetectors (3) are arranged at the opposite sides of plumb wire (1), that through sequential light-up of the light sources, shadow projections of the plumb wire are generated sequentially onto the photodetectors,
that from the geometric position of the light sources and from their shadow projections, shadow straight lines are determinated
and that from that set of shadow straight lines the position of the plumb wire in two dimensions is calculated.

2. Device according to claim 1
characterized by the fact
that the determination of the position of the shadow projections is performed by means of a center of gravity calculation applied to the videosignal stemming from the photodetector array.

3. Device according to claim 1
characterized by the fact
that within the set of shadow straight lines the steep straight lines are mostly considered for the determination of the x-coordinate and that the flat straight lines are mostly considered for the determination of the y-coordinate.

4. Device according to claim 1
characterized by the fact
that light sources 1 resp. photodetectors 2 are implemented as LED (Light Emitting Diodes) resp. as CCD (Charge Coupled Devices).

5. Device according to claim 1
characterized by the fact that
pins (6) are located outside of the measuring region for calibrating purposes.

6. Device according to claim 1
characterized by the fact
that the row of light sources comprizes only two light sources.

7. Device according to claim 1
characterized by the fact
that if the position of the plumb wire 1 lies outside of a predetermined region 5 than warning and/or alarm signals are released.

## Revendications

1. Dispositif pour la mesure passive et sans contact de la position de fils à plomb dans les barrages, cette mesure étant bidimensionnelle et située dans un plan perpendiculaire au fil
caractérisé en ce
qu'une rangée de sources lumineuses (2) et une rangée de photodétecteurs (3) sont placées vis-à-vis sur les côtés du fil à plomb (1),
qu'à la suite de l'allumage séquentiel des sources, séquentiellement une projection d'ombre du fil est générée sur les photoconducteurs,
que moyennant la position géométrique des sources et des centres d'ombres des droites d'ombre sont déterminées et
que moyennant l'ensemble des droites d'ombre la position bidimensionelle du fil est calculée.

2. Dispositif selon revendication 1 caractérisé par le fait que la position des centres des ombre est déterminée moyennant un calcul de centre de gravité appliqué au signal video provenant des détecteurs.

3. Dispositif selon la revendication 1 caractérisé par le fait que, en partant depuis l'ensemble des droites d'ombre, les droites plus raides sont de préférence employées pour le calcul des coordonnées x et les droites moins raides pour le calcule des coordonnées y.

4. Dispositif selon la revendication 1 caractérisé par la fait que les sources sont des LED (Light Emitting Diodes) et les photodétecteurs des CCD (Charge Coupled Devices).

5. Dispositif selon la revendication 1 caractérisé par le fait que, en dehors du champ de mesure, des goupilles 6 sont prévues pour la calibration du système.

6. Dispositif selon la revendication 1 caractérisé par le fait que la rangée de sources ne comprend que 2 sources.

7. Dispositif selon la revendication 1 caractérisé par le fait que si la position du fil 1 se trouve en dehors d'un champ (5) préfixé et sélectionnable, des signaux de prévention et d'alarme sont générés.
